Europäisches Patentamt

European Patent Office

Office européen des brevets

(11) Veröffentlichungsnummer: **0 294 564 B1**

(12) **EUROPÄISCHE PATENTSCHRIFT**

(45) Veröffentlichungstag der Patentschrift:
29.05.91 Patentblatt 91/22

(51) Int. Cl.$^5$: **C01B 3/02, C01C 1/04**

(21) Anmeldenummer: 88106030.5

(22) Anmeldetag: 15.04.88

(54) **Verfahren zur Verminderung des NH3-Methanol-Ausstosses einer Ammoniak-Syntheseanlage.**

Die Akte enthält technische Angaben, die nach dem Eingang der Anmeldung eingereicht wurden und die nicht in dieser Patentschrift enthalten sind.

(30) Priorität: 27.05.87 DE 3717977

(43) Veröffentlichungstag der Anmeldung:
14.12.88 Patentblatt 88/50

(45) Bekanntmachung des Hinweises auf die Patenterteilung:
29.05.91 Patentblatt 91/22

(84) Benannte Vertragsstaaten:
AT BE DE ES FR GB IT NL

(56) Entgegenhaltungen:
US-A- 4 002 565

(56) Entgegenhaltungen:
US-A- 4 464 228
L.J. BUIVIDAS: "Condensate recycled in ammonia plants", Proc. Environ. Symp. 1980, Seiten 365-380

(73) Patentinhaber: Uhde GmbH
Friedrich-Uhde-Strasse 15
W-4600 Dortmund 1 (DE)

(72) Erfinder: Gräger, Hans-Ulrich, Dipl.-Ing.
Luegstrasse 6
W-4600 Dortmund 30 (DE)
Erfinder: Tenbrink, Norbert, Dipl.-Ing.
Heiliger Weg 79
W-4600 Dortmund 1 (DE)

(74) Vertreter: Patentanwälte Meinke und Dabringhaus Dipl.-Ing. J. Meinke Dipl.-Ing. W. Dabringhaus
Westenhellweg 67
W-4600 Dortmund 1 (DE)

EP 0 294 564 B1

## Beschreibung

Die Erfindung richtet sich auf ein Verfahren zur Verminderung des $NH_3$-Methanol-Ausstoßes einer Ammoniak-Syntheseanlage unter Strippung der Ammoniak und Methanol gelöst enthaltenden Kondensaten.

In einer Ammoniakanlage fallen an unterschiedlichen Stellen Prozeßkondensate an, etwa vor der $CO_2$-Wäsche, nach der $CO_2$-Abkühlung oder nach der Methanisierung. Es ist bekannt, diese Kondensate durch eine Niederdruck-Strippung zu reinigen, z.B. $NH_3$ und $CH_3OH$ zu entfernen und die Dämpfe mit dem Wasser dann über den Kopf des Strippers an die Atmosphäre abzugeben. Diese Verfahrensweise ist aber aufgrund von Umweltschutzbedingungen heute nicht mehr möglich, so daß Lösungen gefunden werden mußten, mit denen eine Beseitigung sowohl des $NH_3$ – als auch des $CH_3 OH$-Anteiles möglich ist, wobei das Problem darin liegt, daß die Bestandteile teilweise gasförmig und teilweise in Wasser gelöst vorliegen.

Aus der US-A-4 464 228 ist ein Terfahren bekannt zur Abtrennung von $NH_3$ und Methanol aus einem Prozeßkondensat. Dabei wird statt bisher der Strippdampf ersetzt durch Strippluft, die ähnlich der Vorgehensweise eines Kühlturmes mit Prozeßkondensat im Gegenstrom in Kontakt gebracht wird und dabei das $NH_3$ und Methanol aufnimmt. $NH_3$ und Methanol werden dabei mit der Strippluft in die Athmosphäre abgegeben, und zwar ausschließlich aufgrund ökonomischer Überlegungen. Der Ausstoß an $NH_3$ und Methanol in die Athmosphäre muß aber verhindert werden unter Wärmesenkung, d.h. bei Verringerung der einzusetzenden Energie.

Aufgabe der Erfindung ist daher die Schaffung einer Lösung, mit der eine Verminderung des $NH_3$ - Methanol-Ausstoßes möglich wird, wobei der Einsatz an Energie optimiert wird, vergleichsweise einfache Apparaturen möglich werden, die Investitionskosten gesenkt werden und niedrigere

Verbrauchszahlen erreichbar sind.

Bei einem Verfahren der eingangs bezeichneten Art wird diese Aufgabe gemäß der Erfindung dadurch gelöst, daß die Strippung mit Dampf unter einem Druck von 2-7 bar vorgenommen wird.

Mit der Erfindung wird erreicht, daß sowohl der $NH_3$ -Anteil als auch der $CH_3OH$-Anteil den Kondensaten entzogen werden können, dadurch daß das erfindungsgemäße Dampfdruckniveau dies möglich macht. So wird das aus dem Stripper stammende Dampf/$NH_3$/Methanol-Gemisch teilweise bereits in einem unter erhöhter Temperatur betriebenen Wärmetauscher kondensierbar. Bei dem beanspruchten Druckniveau löst sich wieder ein Teil des $NH_3$ und des Methanols auf, so daß der verbleibende gasförmige Anteil an nicht kondensiertem $NH_3$ und Methanol z.B. einer anderen Verwendung zugeführt werden kann.

Zwar bedeutet eine Strippung mit höher gespannten Dampf gegenüber einer Niederdruckdampfstrippung einen Mehraufwand an Energie, dieser Mehraufwand an Energie ist aber begrenzt und zum Teil anderweitig benutzbar, wie dies die weitere Ausgestaltung die Erfindung auch vorsieht.

So sieht in Ausgestaltung die Erfindung vor, daß wenigstens ein Teil des Dampf-/Methanol-/Ammoniak-Gemisches zur Regenerierung von Waschlösungen eingesetzt wird.

Der Energieaufwand, der zur Strippung der verunreinigten Kondensate aufzubringen ist, geht also dem Prozeß nicht verloren.

Hinzu kommt, daß durch ein weiteres Merkmal, was nach der Erfindung dadurch besteht, daß eine Trennung von gasförmigen und flüssigen Bestandteilen erfolgt und die brennbaren Bestandteile, insbesondere das nichtkondensierte $NH_3$-/Methanol-Gas, in die Ammoniaksynthese zurückgegeben werden, erreicht wird, daß die in den brennbaren Bestandteilen enthaltenen Wärmeinhalte wiederum dem Prozeß nicht verloren gehen.

Die Erfindung sieht schließlich auch vor, daß das Kondensat aus der Gas-Flüssigkeitstrennung in den Stripper zurückgeführt wird.

Durch diese letzte Maßnahme wird erreicht, daß die Bestandteile an $NH_3$ und Methanol, die entsprechend deren Partialdrücken noch im Kondensat gelöst sind, dem Stripper wieder zugeführt werden, was bedingt, daß der Kreislauf im Prinzip geschlossen betrieben werden kann, so daß keinerlei Anteile an $NH_3$ oder Methanol mehr in die Umwelt abgeleitet werden.

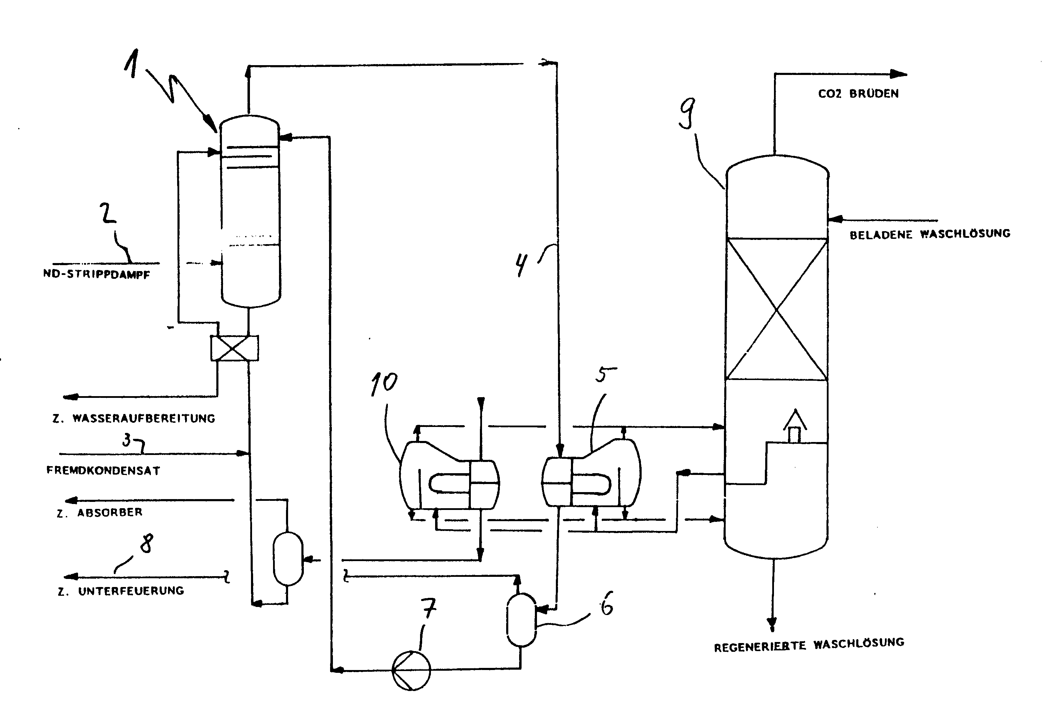

Die Erfindung ist nachstehend anhand der Zeichnung beispielsweise näher erläutert. Diese zeigt in der einzigen Figur ein mögliches Prozeßschaltbild nach der Erfindung.

Einem Kondensatstripper 1 wird über eine Leitung 2 Niederdruckstrippdampf und über die Leitung 3 Fremdkondensat zugeführt. Das aus dem Kondensat ausgetriebene Dampf/$NH_3$/Methanol-Gemisch wird über eine Leitung 4 aus dem Kondensatstripper 1 einem Reboiler 5 zugeführt, von dort einem Abscheider 6, der die gasförmigen Anteile von den flüssigen trennt. Die flüssigen Anteile werden über eine Rückflußpumpe 7 dem Kondensatstripper 1 wieder aufgegeben, während die gasförmigen, brennbaren Anteile über eine Leitung 8 zu einer Unterfeuerung geführt werden können.

Die aus dem Wärmetauscher 5 zu gewinnende Wärme kann genutzt werden und z.B., wie dargestellt, zur Beheizung eines Regenerators 9 für eine $CO_2$-Wäsche herangezogen werden.

Im Kreislauf kann zusätzlich ein weiterer Reboiler 10 vorgesehen sein, entweder in der Schaltung, wie dies in der Figur dargestellt ist, oder z.B. zur direkten Beaufschlagung des Kondensatstrippers 1, was nicht näher dargestellt wurde.

Erkennbar handelt es sich hier um ein geschlossenes System, so daß kein NH$_3$ oder Methanol in die Atmosphäre gelangen kann.

## Ansprüche

1. Verfahren zur Verminderung des NH$_3$-Methanol-Ausstoßes einer Ammoniak-Syntheseanlage unter Strippung der Ammoniak und Methanol gelöst enthaltenden Kondensaten, wobei die Strippung mit Dampf unter einem Druck von 2-7 bar vorgenommen wird.

2. Verfahren nach Anspruch 1, dadurch gekennzeichnet, daß wenigstens ein Teil des Dampf-/Methanol-/Ammoniak-Gemisches zur Regenerierung von Waschlösungen eingesetzt wird.

3. Verfahren nach Anspruch 1 oder 2, dadurch gekennzeichnet, daß eine Trennung von gasförmigen und flüssigen Bestandteilen erfolgt und die brennbaren Bestandteile, insbesondere das nichtkondensierte NH$_3$-/Methanol-Gas in die Ammoniaksynthese zurückgegeben werden.

4. Verfahren nach einem der vorangehenden Ansprüche, dadurch gekennzeichnet, daß das Kondensat aus der Gas-Flüssigkeitstrennung in den Stripper zurückgeführt wird.

## Claims

1. Process for reducing the NH$_3$/methanol discharges of an ammonia synthesis piano by stripping the condensates containing ammonia and methanol in a free form, the stripping being carried out with steam under a pressure of 2-7 bar.

2. Process according to claim 1, characterised in that at least part of the steam/methanol/ammonia mixture is used for regenerating wash solutions.

3. Process according to claim 1 or 2, characterised in that separation of gaseous and liquid components is carried out and the combustible components, in particular the uncondensed NH$_3$/methanol gas are returned to the ammonia synthesis cycle.

4. Process according to one of the previous claims, characterised in that the condensate from the gas/liquid separation is returned to the stripper.

## Revendications

1. Procédé pour diminuer l'émission de NH$_3$ et de méthanol d'une installation de synthèse de l'ammoniac avec strippage des condensats contenant de l'ammoniac et du méthanol dissous, dans lequel le strippage est effectué avec de la vapeur sous une pression de 2-7 bars.

2. Procédé selon la revendication 1, caractérisé en ce qu'au moins une partie du mélange vapeur/méthanol/ ammoniac est utilisée pour la régénération des solutions de lavage.

3. Procédé selon la revendication 1 ou 2, caractérisé en ce qu'une séparation des constituants gazeux et liquides a lieu et en ce que les constituants combustibles, en particulier le NH$_3$ gazeux et le méthanol gazeux non condensés, sont renvoyés à la synthèse d'ammoniac.

4. Procédé selon l'une des revendications précédentes, caractérisé en ce que le condensat provenant de la séparation gaz/liquide est renvoyé dans le dispositif de strippage.

1

2

ND-STRIPPDAMPF

Z. WASSERAUFBEREITUNG

3

FREMDKONDENSAT

Z. ABSORBER

8

Z. UNTERFEUERUNG

10

5

4

7

6

9

CO2 BRÜDEN

BELADENE WASCHLÖSUNG

REGENERIERTE WASCHLÖSUNG

EP 0 294 564 B1